# EUROPÄISCHE PATENTANMELDUNG

(11) **EP 1 443 258 A2**
(43) Veröffentlichungstag der Anmeldung: **04.08.2004**
(21) Anmeldenummer: 03025565.7
(22) Anmeldetag: 08.11.2003
(51) Int. Cl.: F16L 59/02

(54) **Dämmeinrichtung für Leitungssysteme**

(30) Priorität: 24.01.2003 AT 922003
(71) Anmelder: GE Jenbacher GmbH & Co. OHG, 6200 Jenbach (AT)
(72) Erfinder: Gruber, Friedrich, 6283 Hippach 44 (AT)
(74) Vertreter: Torggler, Paul N.

(57) **Zusammenfassung**

Dämmeinrichtung für Leitungssysteme (1), insbesondere für Abgasleitungen von Brennkraftmaschinen, mit mindestens einer Dämmschicht, welche auf mindestens einer Stützschale (3', 3") angeordnet ist, wobei die Dämmschicht einen oder mehrere in sich steife, vorzugsweise mineralische, Dämmformteil(e) (2) aufweist.

## Beschreibung

Die vorliegende Erfindung betrifft eine Dämmeinrichtung für Leitungssysteme, insbesondere für Abgasleitungen von Brennkraftmaschinen, mit mindestens einer Dämmschicht, welche auf mindestens einer Stützschale angeordnet ist.

Gattungsgemäße Dämmeinrichtungen für Leitungssysteme sind beim Stand der Technik in verschiedenen Varianten bekannt. Die EP 1 134 478 A2 zeigt eine in sich flexible Dämmeinrichtung. In der DE 33 13 844 A1 sind Teile der Dämmschicht an einem Metallgitter befestigt. Als Dämmschicht werden häufig flexible Glas- oder Steinwollematten verwendet. Diese haben den Nachteil, dass sie zum Beispiel von einem Gitter oder dergleichen umfasst sein müssen, um in einer gewissen Form gehalten zu werden. Darüber hinaus haben flexible Isolier- oder Dämmmatten auch den Nachteil, dass sie mit der Zeit in sich zusammenfallen bzw. Auflösungserscheinungen zeigen und dadurch die Dämmung nicht mehr ausreichend gut gewährleistet ist. Dieser Alterungsprozess wird beim Stand der Technik, besonders bei Leitungssystemen mit erhöhter Temperaturentwicklung, wie zum Beispiel bei Abgasleitungen, beobachtet. Ein weiterer Nachteil ist der erhebliche Aufwand die flexiblen Dämmschichten zu montieren, da zumindest die Befestigung an zahlreichen Haltepunkten oder Stützelementen oder dergleichen notwendig ist.

Aufgabe der Erfindung ist es daher eine gattungsgemäße Dämmeinrichtung zu schaffen, bei der die genannten Nachteile des Standes der Technik beseitigt sind.

Dies wird erfindungsgemäß dadurch erreicht, dass die Dämmschicht einen oder mehrere in sich steife, vorzugsweise mineralische, Dämmformteil(e) aufweist.

Die erfindungsgemäßen, in sich steifen Dämmformteile lassen sich einfach mit einer oder mehreren Schrauben und/oder Nieten und/oder Klammern und/oder dergleichen an der Stützschale, welche vorzugsweise Stahlblech aufweist, befestigen. Darüber hinaus können die in sich steifen Dämmformteile auch unterschiedlichst geformt und damit an die Form des Leitungssystems angepasst werden. Bezüglich der Langlebigkeit weisen erfindungsgemäße Ausführungsvarianten ebenfalls erhebliche Vorteile auf, da die Dämmformteile auch, zum Beispiel nach langer Einwirkung hoher Temperaturen oder dergleichen, ihre Form und ihre Dämmwirkung unverändert beibehalten.

Weitere Merkmale und Vorteile der vorliegenden Erfindung ergeben sich aus der nachfolgenden Figurenbeschreibung. Dabei zeigt:
- Fig. 1: einen Schnitt durch ein erfindungsgemäßes Ausführungsbeispiel und
- Fig. 2 und Fig. 3: weitere Details zu weiteren Varianten.

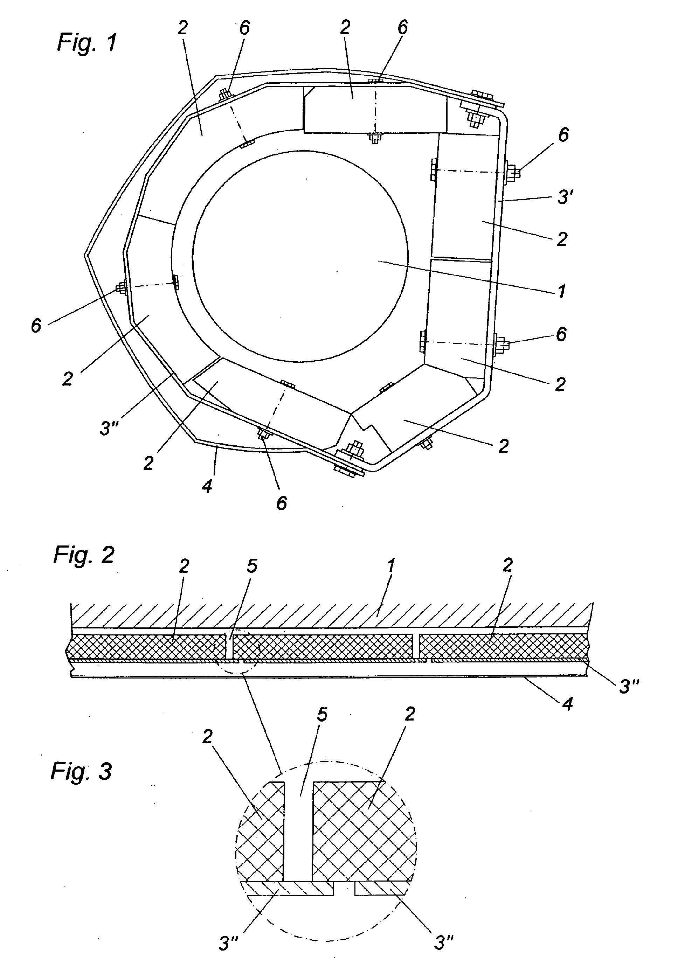

Fig. 1 zeigt eine erfindungsgemäß wärmegedämmte und schallisolierte Abgasleitung 1. Die Dämmeinrichtung besteht im wesentlichen aus zwei miteinander durch Schrauben verbundenen Stützschalen 3' und 3" sowie daran angeordneten in sich steifen Dämmformteilen 2. Diese sind mit Schrauben 6 an den Stützschalen 3' und 3" befestigt. Als Berührungsschutz und/oder Sichtverkleidung ist eine, die Stützschalen teilweise oder vollständig umfassende, vorzugsweise hinterlüftete, Außenverkleidung 4 vorgesehen. Neben dem Berührungsschutz trägt die Außenverkleidung 4 auch zur Steigerung der Dämm- bzw. Isolationswirkung und zur Verbesserung der Optik bzw. des Designs bei. Der Luftspalt zwischen Stützschale und Außenverkleidung beträgt günstigerweise mindestens 4 mm.

Die erfindungsgemäß verwendeten Dämmformteile 2 können aus verschiedenen hartgepressten Formpressteilen aus Isoliermaterial oder Dämmmaterial hergestellt sein. Besonders günstig ist hierbei die Verwendung von speziellen Gesteinsgranulaten auf Vermiculitebasis (Aluminium-Eisen-Magnesiumsilikat). Die Dämmformteile 2 sind an der Außenschale 3' und 3" in der Weise angeordnet, dass sie sich zum Einen nicht gegenseitig berühren und zum Anderen auch nicht die Abgasleitung 1 berühren. Der Luftspalt zwischen Abgasleitung und den Dämmformteilen 2 beträgt günstigerweise mindestens 3 mm. Eine günstigere Variante sieht vor, dass die Dämmschicht mehrteilig aufgebaut ist. Besonders bevorzugt ist es, wenn mindestens vier Dämmformteile über den Umfang des Abgasrohres 1 verteilt sind. Diese können mit 4 Schrauben, Nieten oder dergleichen an der Stützschale befestigt sein. Durch Verwendung mehrerer Formpressteile ist die Dämmeinrichtung in einfacher Weise herstellbar. Darüber hinaus ist auch eine bessere Formsteifigkeit und ein geringeres Beanspruchungsniveau der gesamten Einrichtung erreicht.

Im gezeigten Ausführungsbeispiel ist die Stützschale 3', 3" über den Umfang der Abgasleitungen 1 zweiteilig ausgebildet. Hierbei kann ein Stützschalensegment 3' fest mit den wassergekühlten Zylinderköpfen eines Motors verbunden sein, während die zweite halbschalenförmig ausgeführte Stützschale 3" an der ersten Stützschale 3' mittels der Schrauben 6' befestigt ist. Die mit dem Motor verbundene innere Stützschale 3' ist deutlich formsteifer als die u-förmige Außenstützschale 3". Hierdurch wird eine ausreichend hohe Systemsteifigkeit bei möglichst geringem Aufwand und hoher Montagefreundlichkeit erreicht. Die Länge der Segmente kann auf die Länge der Zylinder, des hier nicht dargestellten Motors abgestimmt sein. So kann zum Beispiel eine Schale für zwei Zylinder vorgesehen sein, wodurch eine modulare Bauweise möglich wird. Eine maximale Bruchsicherheit gegenüber Beanspruchung auf Vibration wird durch ein geeignetes Dicken-Längen-Verhältnis der Formpressteile erreicht. So ist es günstig vorzusehen, dass das Verhältnis aus Dicke der Dämmformteile 2 zur Länge der Dämmformteile 2 größer oder gleich 0,05 vorzugsweise größer oder gleich 0,1 ist. Im Sinne einer optimalen Schwingungssteifigkeit ist günstigerweise vorgesehen, dass die Stützschalen 3' , 3" mindestens eine Dicke von 1,5 mm, vorzugsweise von mindestens 3 mm, aufweisen.

In den Fig. 2 und 3 ist im Detail dargestellt, wie die Freiräume 5 zwischen den sich nicht berührenden Dämmformteilen 2 von der Stützschale 3', 3" überdeckt sind. Hierdurch wird die Wärmestrahlung optimal abgeschirmt.

Die vorliegende Erfindung ist nicht auf die gezeigten Ausführungsbeispiele beschränkt, es können vielmehr unterschiedlichste Formen der Dämmeinrichtung erfindungsgemäß realisiert werden.

## Patentansprüche

1. Dämmeinrichtung für Leitungssysteme, insbesondere für Abgasleitungen von Brennkraftmaschinen, mit mindestens einer Dämmschicht, welche auf mindestens einer Stützschale angeordnet ist, **dadurch gekennzeichnet, dass** die Dämmschicht einen oder mehrere in sich steife, vorzugsweise mineralische, Dämmformteil(e) (2) aufweist.

2. Dämmeinrichtung nach Anspruch 1, **dadurch gekennzeichnet, dass** sie von einer, vorzugsweise hinterlüfteten, Außenverkleidung (4) umfasst ist.

3. Dämmeinrichtung nach einem der Ansprüche 1 oder 2, **dadurch gekennzeichnet, dass** mindestens eine Dämmformteil (2) ein hartverpresster Formpressteil, vorzugsweise aus Gesteinsgranulat auf Aluminium-Eisen-Magnesiumsilikat-Basis, ist.

4. Dämmeinrichtung nach einem der Ansprüche 1 bis 3, **dadurch gekennzeichnet, dass** zwischen benachbarten Dämmformteilen (2) ein Freiraum (5) angeordnet ist, aber vorzugsweise der verbleibende Freiraum (5) von der Stützschale (3', 3") überdeckt ist.

5. Dämmeinrichtung nach einem der Ansprüche 1 bis 4, **dadurch gekennzeichnet, dass** die Stützschale (3', 3") zweiteilig aufgebaut ist.

6. Dämmeinrichtung nach einem der Ansprüche 1 bis 5, **dadurch gekennzeichnet, dass** das Verhältnis aus Dicke der Dämmformteile (2) zur Länge der Dämmformteile (2) größer oder gleich 0,05, vorzugsweise größer oder gleich 0,1, ist.

7. Dämmeinrichtung nach einem der Ansprüche 1 bis 6, **dadurch gekennzeichnet, dass** die Dämmformteile (2) mit Schrauben (6) und/oder Nieten und/oder Klammern an der Stützschale (3', 3") befestigt sind.

8. Dämmeinrichtung nach einem der Ansprüche 1 bis 7, **dadurch gekennzeichnet, dass** die Stützschale (3', 3") eine Dicke von mindestens 1,5 mm, vorzugsweise von mindestens 3 mm, aufweist.

9. Verwendung einer Dämmeinrichtung nach einem der Ansprüche 1 bis 8 zur Wärmedämmung und/oder Schallisolierung eines Leitungssystems, insbesondere einer Abgasleitung (1) von einer Brennkraftmaschine.
